# FASCICULE DE BREVET EUROPEEN

(11) **EP 1 453 227 B1**
(45) Date de publication et mention de la délivrance du brevet: **01.09.2010**
(21) Numéro de dépôt: 03293295.6
(22) Date de dépôt: 23.12.2003
(51) Int. Cl.: H04B 10/08, H04B 10/17

(54) **Contrôle dynamique du niveau de dégradation de signaux optiques dans un réseau de communications optique de type transparent**
Dynamische Steuerung des Qualitätsverlustes von optischen Signalen in einem transparenten optischen Kommunikationsnetzwerk
Dynamic control of degradation level of optical signals in a transparent optical communications network

(30) Priorité: 10.01.2003 FR 0300214
(43) Date de publication de la demande: 01.09.2004
(73) Titulaire: Alcatel Lucent, 75008 Paris (FR)
(72) Inventeur: Faure, Jean-Paul, 75014 Paris (FR); Bouder, Vincent, 75013 Paris (FR)
(74) Mandataire: Shamsaei Far, Hassan

(56) Documents cités:
- EP-A- 1 130 803
- WO-A-02/071670
- US-B1- 6 400 479

## Description

L'invention concerne le domaine de la transmission optique de signaux au sein des réseaux optiques dits « à commutation de longueurs d'onde » ou « à commutation de bandes de longueurs d'onde », également appelés réseaux transparents.

Dans les réseaux transparents de nombreux facteurs peuvent entraîner des inhomogénéités entre canaux de différentes longueurs d'onde en termes de performances, c'est-à-dire de qualité des signaux reçus après transmissions. C'est notamment le cas de la dispersion chromatique et de la variation des gains d'amplification.

Afin de remédier à cet inconvénient, il a été proposé des procédés d'équilibrage de puissance destinés à permettre l'obtention de performances sensiblement constantes d'un canal à l'autre.

L'utilisation de tels procédés convient aux liaisons dites « point à point » dans lesquelles les canaux d'une même bande suivent un même chemin et par conséquent subissent les mêmes dégradations. Cependant, dans les réseaux transparents précités, les canaux présents sur une même portion de ligne de transmission (ou fibre optique) peuvent provenir de parties de réseau différentes et par conséquent les signaux qui circulent dans ces canaux peuvent présenter des caractéristiques optiques très différentes. Cela rend difficile l'équilibrage des performances entre canaux.

Certes, une optimisation individualisée de chaque canal d'une fibre optique peut être effectuée, mais cela peut entraîner une détérioration des performances d'autres canaux de cette fibre optique en raison de leur interdépendance induite par le couplage de gain entre les cascades d'amplificateurs des lignes de transmission du réseau.

L'optimisation de l'équilibrage des performances des canaux est néanmoins possible, en théorie, dans ce type de réseau transparent lorsque l'on dispose de certains paramètres associés aux signaux de chaque canal et liés à leur qualité, comme par exemple le taux d'erreurs ou le rapport signal sur bruit optique (ou OSNR pour « Optical Signal to Noise Ratio ») et le niveau de puissance (ou puissance optique). Mais cela est rarement le cas.

Dans la pratique, on optimise les performances des canaux sur le chemin le plus long du réseau, lors de sa conception. Pour ce faire, on détermine à l'extrémité du chemin le plus long les valeurs des OSNRs associés à certains canaux choisis, par exemple à l'aide d'analyseurs de spectre optique (ou OSAs pour « Optical Spectrum Analysers ») ou d'équipements dédiés, tels que les contrôleurs de performance optique (ou OPM pour « Optical Performance Monitor »), tout en maintenant les autres canaux à des niveaux de puissance prédéfinis compte tenu des caractéristiques du réseau.

Une telle optimisation n'est pas satisfaisante pour au moins trois raisons. Tout d'abord, seuls les canaux qui empruntent le chemin le plus long sont considérés comme potentiellement pénalisés et susceptibles d'avoir besoin d'un équilibrage de performances. Or, cela n'est vrai qu'à condition que les autres canaux empruntent des chemins plus courts et qu'ils disposent d'une importante marge de qualité qui nuirait à la structure même du réseau. Ensuite, du fait de son caractère statique, cette optimisation ne permet pas de remplacer des canaux optimisés par des canaux non optimisés. En effet, cela imposerait de placer les canaux qui empruntent des chemins plus courts à des niveaux de puissance inférieurs, tout en assurant des niveaux de puissance plus importants aux canaux les plus pénalisés, ce qui n'est pas compatible avec un traitement statique. Enfin, toujours du fait de son caractère statique, cette optimisation est incompatible avec des mécanismes d'allocation dynamique de canal et/ou de reconfiguration de ligne de transmission.

Une méthode et un système sont décrits dans le document WO 02/071670 qui concernent la réalisation de pré-amplification sur un ou plusieurs canaux optiques portant respectivement un ou plusieurs signaux optiques, en ajustant le débit binaire de l'un ou plusieurs des signaux, ajustant par conséquent, la valeur du taux d'erreurs binaire (en anglais : Bit Error Rate, BER). Dans ce document les étapes suivants sont décrites : a) obtenir la valeur du BER pour un ou plusieurs canaux optiques, b) réduire le débit binaire dans un ou plusieurs des canaux optiques ayant une valeur de BER obtenue qui est au dessus d'une valeur maximum absolue ou relative, afin d'ajuster les valeurs de BER concernées.

Une méthode et un appareil sont décrits dans EP-A-1 130 803 pour mesurer le rapport signal/bruit optique d'un signal optique. Selon ce document, un rapport signal/bruit optique partiel est défini. Ce rapport est calculé à partir d'une quantité physique prédéterminée, de la somme de nombres inverses des rapports signal/bruit optiques partiels, et d'un nombre inverse de la somme calculé. De cette manière, le rapport signal/bruit optique est acquis. La méthode, permet donc de mesurer ledit rapport sans mesurer directement l'émission spontanée amplifiée dans le signal optique.

Un réseau de transmissions optiques multiplexé par division de longueur d'onde (WDM) est décrit dans US-B1-6 400 479, capable de permettre à un émetteur de produire la puissance nécessaire pour qu'un canal soit ajusté afin de réaliser le rapport signal/bruit optique désiré (OSNR) pour ledit canal indépendamment des niveaux de puissance d'autres signaux optiques sur le même chemin. Des amplificateurs optiques entre l'émetteur et un récepteur sont configurés pour fonctionner avec un gain constant sur une gamme indiquée de puissance de signal optique d'entrée, et les liens sont configurés afin d'empêcher la saturation profonde des amplificateurs optiques dus à un effet de cascade des amplificateurs optiques. L'OSNR du signal de communications optiques reçu par le récepteur est mesuré, et la puissance du signal transmis par l'émetteur est ajustée pour atteindre un OSNR désiré au niveau du récepteur. Selon ce document, il est n'est pas nécessaire d'ajuster la puissance de sortie d'autres émetteurs fournissant des signaux sur le même chemin.

L'invention a donc pour but d'améliorer la situation.

Elle propose à cet effet un procédé de contrôle de paramètres de dégradation, comme par exemple la variation du rapport signal sur bruit optique (ou δOSNR), associés à des signaux de canaux de longueurs d'onde distinctes, éventuellement agencés en bandes de canaux, et transmis par des lignes de transmission reliant entre-eux les noeuds d'un réseau de communications optique de type transparent.

On entend ici par « noeud », un équipement de communications chargé d'assurer la commutation et/ou le routage de longueurs d'onde ou de bandes de longueurs d'onde au sein d'un réseau transparent. Il pourra donc s'agir d'un brasseur (ou « cross-connect »).

Ce procédé se caractérise par la combinaison d'étapes suivantes :
a) mesurer pour chacun d'au moins deux canaux ou bandes de canaux pour moins une ligne de transmission une valeur d'un paramètre (par exemple δOSNR) représentatif de la dégradation subie par des signaux de ces canaux ou bandes de canaux dans cette ligne, et
b) déterminer pour lesdits canaux, ou lesdites bandes de canaux, compte tenu des valeurs déterminées, un profil de puissance à imposer aux signaux de ces canaux afin qu'ils présentent des valeurs prédéterminées de paramètre de dégradation.

Selon une autre caractéristique de l'invention, on applique le profil de puissance dans un noeud du réseau qui est placé à une extrémité amont de la ligne de transmission. En d'autres termes, un profil de puissance est préférentiellement appliqué non pas sur les signaux reçus qui ont fait l'objet de la détermination de la valeur du paramètre de dégradation, mais sur les prochains signaux qui doivent circuler dans la ligne de transmission.

Préférentiellement, on choisit les valeurs de paramètre de dégradation à l'étape b) de sorte qu'elles soient incluses dans un intervalle de largeur (ou tolérance d'amplitude) choisie (éventuellement nulle). Dans ce cas, il est avantageux de prévoir un mécanisme itératif consistant à répéter les étapes a) et b), par exemple en faisant varier à chaque fois un pas de traitement, jusqu'à ce que les valeurs de paramètre de dégradation soient toutes incluses dans l'intervalle choisi.

Par ailleurs, il peut être avantageux, notamment lorsque le réseau est à commutation de bandes de longueurs d'onde, d'égaliser dans chaque ligne de transmission les gains des canaux des différentes bandes en fonction de leurs longueurs d'onde respectives, avant de réceptionner les signaux au niveau du noeud considéré.

L'invention porte également sur un dispositif de contrôle de paramètres de dégradation, comme par exemple δOSNR, associés à des signaux de canaux de longueurs d'onde distinctes, éventuellement agencés en bandes de canaux, et transmis par des lignes de transmission reliant entre-eux les noeuds d'un réseau de communications optique de type transpar

Ce dispositif se caractérise par le fait qu'il comprend des moyens de traitement chargés, en cas de transmission de signaux d'au moins deux canaux ou bandes de canaux par une ou plusieurs lignes de transmission, de mesurer pour chacun de ces canaux, ou chacune de ces bandes de canaux, d'une part, la valeur d'un paramètre (par exemple δOSNR) représentatif de la dégradation des signaux dans la ligne, et d'autre part, compte tenu des valeurs mesurées, un profil de puissance à imposer aux signaux de sorte qu'ils présentent des valeurs prédéterminées de paramètre de dégradation.

Préférentiellement, les moyens de traitement sont agencés de manière à choisir les valeurs de paramètre de dégradation de sorte qu'elles soient incluses dans un intervalle de largeur (ou tolérance d'amplitude) choisie (éventuellement nulle). Dans ce cas, il est avantageux que les moyens de traitement soient agencés de manière à réitérer la détermination des valeurs de paramètre de dégradation, par exemple en faisant varier un pas de traitement, jusqu'à ce que les valeurs de paramètre de dégradation soient incluses dans l'intervalle choisi.

Par ailleurs, il est particulièrement avantageux que les moyens de traitement comprennent un module de contrôle de puissance agencé de manière à imposer aux signaux les profils de puissance déterminés, correspondants, avant qu'ils ne soient introduits dans une ligne de transmission sortante. Préférentiellement, ce module de contrôle de puissance est agencé pour imposer des profils de puissance déterminés dans un noeud du réseau qui est placé à une extrémité amont de la ligne de transmission considérée.

Un tel dispositif de contrôle peut par exemple être intégré dans un équipement de communications d'un réseau transparent, de type noeud ou serveur de gestion. Il peut ainsi agir soit sur un noeud, de façon locale, soit sur une multiplicité de noeuds, de façon centralisée.

D'autres caractéristiques et avantages de l'invention apparaîtront à l'examen de la description détaillée ci-après, et des dessins annexés sur lesquels :
- la figure 1 illustre de façon schématique une partie d'un réseau transparent équipé de dispositifs de contrôle selon l'invention,
- la figure 2 illustre de façon schématique un exemple de réalisation d'un dispositif de contrôle selon l'invention,
- les figures 3A à 3C sont des diagrammes illustrant schématiquement la puissance des signaux de canaux en sortie, respectivement, du noeud N1, de l'équipement E et du noeud N3, et les OSNRs associés, en fonction de la longueur d'onde,
- les figures 4A et 4B sont des diagrammes illustrant schématiquement et respectivement la puissance des signaux de canaux C1 à C3 en sortie du noeud N2, et les OSNRs associés, avant traitement par le dispositif selon l'invention,
- les figures 5A et 5B sont des diagrammes illustrant schématiquement et respectivement la puissance des signaux de canaux C1 à C3 à l'entrée du noeud N4, et les OSNRs associés, avant traitement par le dispositif selon l'invention,
- les figures 6A et 6B sont des diagrammes illustrant schématiquement et respectivement la puissance des signaux de canaux en sortie du noeud N2, et les OSNRs associés, après traitement par le dispositif selon l'invention, et
- les figures 7A et 7B sont des diagrammes illustrant schématiquement et respectivement la puissance des signaux de canaux à l'entrée du noeud N4, et les OSNRs associés, après traitement par le dispositif selon l'invention.

Ces figures pourront non seulement servir à compléter l'invention, mais aussi contribuer à sa définition, le cas échéant.

L'invention concerne les réseaux de communications optique transparents qu'ils soient du type dit « à commutation de longueurs d'onde » ou « à commutation de bandes de longueurs d'onde », comme par exemple les réseaux « à multiplexage par répartition de longueurs d'onde » (ou WDM pour « Wavelength Division Multiplexing ») et les réseaux « à multiplexage par répartition dense de longueurs d'onde » (ou DWDM pour « Dense Wavelength Division Multiplexing »).

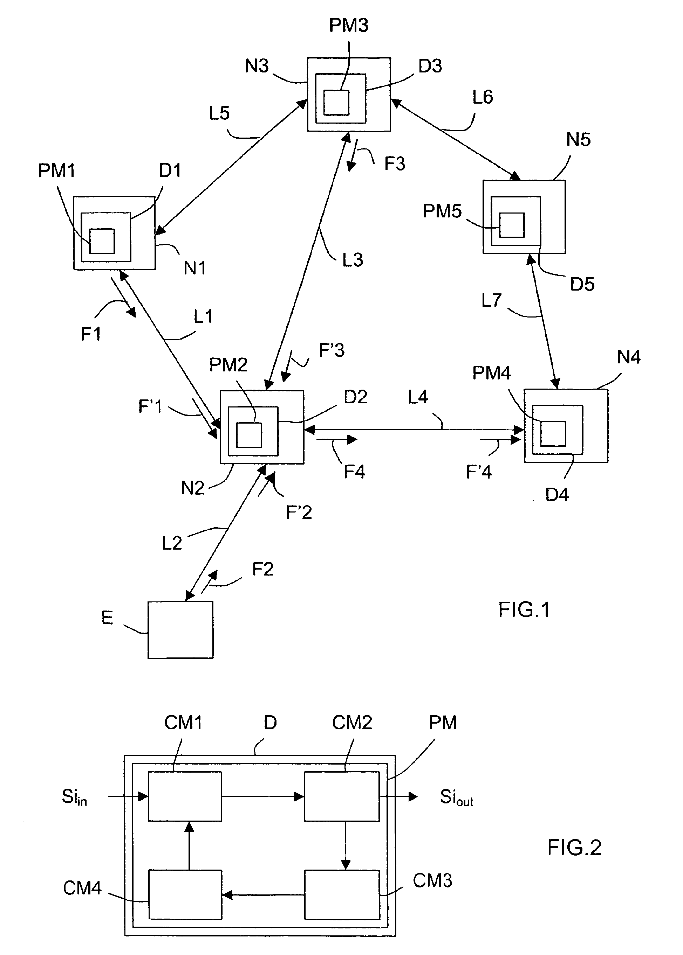

Comme illustré sur la figure 1, ces réseaux transparents comprennent généralement une multiplicité d'équipements de communications, tels que des serveurs E ou des brasseurs (ou « cross-connects ») Ni (ici i = 1 à 5), reliés entre eux par des lignes de transmission optique Lj (ici j = 1 à 7).

Une ligne de transmission optique Lj est généralement constituée d'une ou plusieurs portions de lignes, également appelées « spans », comportant une ou plusieurs fibres optiques couplées à un amplificateur optique. Chaque fibre optique est capable de transmettre des signaux de canaux C auxquels sont affectés des longueurs d'onde particulières. Lorsque le réseau est à commutation de bandes de longueurs d'onde, les canaux C sont regroupés en bandes de largeur sensiblement constante, dans lesquelles ils sont sensiblement équidistants les uns des autres.

Les brasseurs constituent des noeuds optiques Ni chargés d'assurer la commutation et/ou le routage des longueurs d'onde ou des bandes de longueurs d'onde au sein du réseau transparent. Un brasseur peut être par exemple du type dit « à insertion et/ou extraction » (ou « Add/Drop ») de ressources, notamment optiques. Selon la granularité envisagée et selon le type du réseau, une ressource peut être soit un paquet de données, soit une longueur d'onde, soit encore une bande de longueurs d'onde.

Une ligne de transmission Lj reliant deux noeuds voisins Ni peut donc être considérée comme une cascade de spans qui introduit une dégradation des signaux entre ces deux noeuds et, par conséquent, des inhomogénéités de performances entre les canaux lorsque ces derniers ont transité par des lignes de transmission différentes.

L'invention a pour but de permettre l'optimisation de l'équilibrage des performances entre canaux.

Elle propose à cet effet un dispositif D dédié au contrôle de paramètres de dégradation associés à des signaux circulant dans des canaux C de longueurs d'onde distinctes.

Préférentiellement et comme illustré sur la figure 1, chaque noeud Ni du réseau transparent est équipé d'un dispositif Di selon l'invention, chargé d'optimiser les performances des canaux qui lui parviennent d'une ou plusieurs lignes dites « entrantes » et qu'il doit retransmettre sur une ou plusieurs lignes dites « sortantes ». Mais, dans une variante on pourrait ne prévoir qu'un unique dispositif D implanté, par exemple, dans un serveur de gestion du réseau, et chargé d'agir sur tous les noeuds du réseau de façon centralisée. On pourrait également prévoir plusieurs dispositifs D implantés dans différents serveurs de gestion du réseau, et chargés d'agir sur certains noeuds dudit réseau de façon centralisée.

Dans ce qui suit, on considère que le réseau transparent est à commutation de longueurs d'onde.

Le dispositif de contrôle Di comprend un module de traitement PMi chargé, en cas de transmission de signaux d'au moins deux canaux ou bandes par une ligne de transmission Lj, aux extrémités de laquelle sont placés un noeud amont Ni, dans lequel il est implanté, et un noeud aval Ni', de déterminer pour chacun de ces canaux, d'une part, la valeur d'un paramètre représentatif de la dégradation des signaux dans la ligne correspondante, et d'autre part, compte tenu des valeurs déterminées, un profil de puissance d'émission à imposer aux signaux de sorte qu'ils présentent une valeur de paramètre de dégradation choisie.

Afin de faciliter la compréhension de l'invention, on décrit ci-après un exemple de fonctionnement du dispositif de contrôle D2 qui est implanté dans le noeud N2.

Dans l'exemple illustré sur la figure 1, le noeud N2 est raccordé, d'une première part, au noeud N1 par la ligne de transmission L1, d'une deuxième part, au serveur E par la ligne de transmission L2, d'une troisième part, au noeud N3 par la ligne de transmission L3, et d'une quatrième part, au noeud N4 par la ligne de transmission L4.

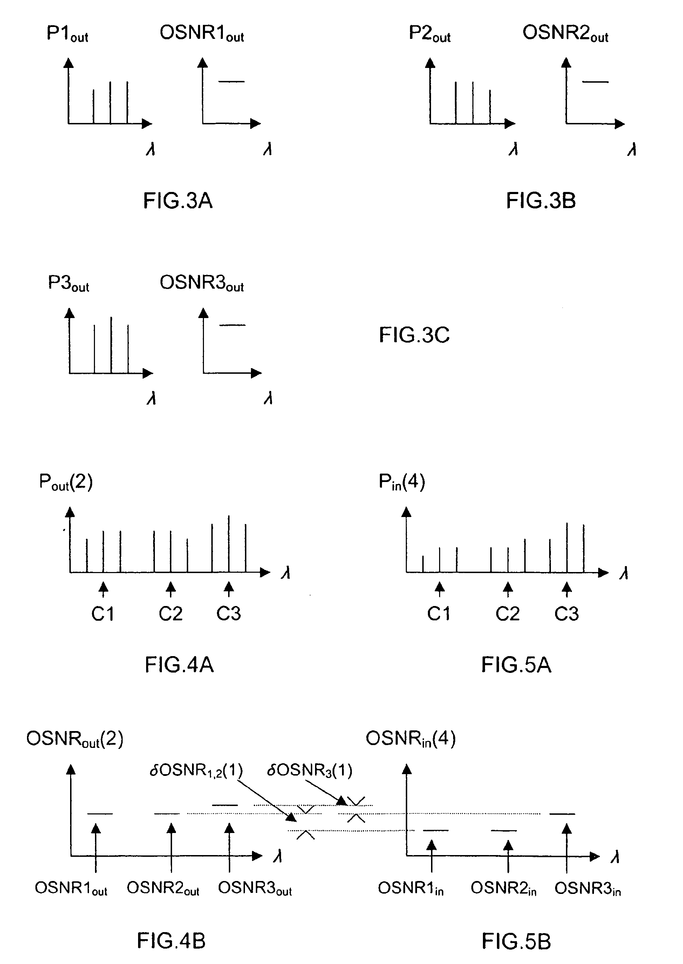

Par exemple, le noeud N1 a reçu sur l'un de ses ports d'insertion trois canaux C1 de longueurs d'onde distinctes portant des signaux qu'il doit transmettre au noeud N4, via le noeud N2. Les signaux de ces trois canaux C1 sont introduits dans la ligne L1, suivant la flèche F1, avec des puissances (P1ₒᵤₜ) et un rapport signal sur bruit optique ou OSNR pour « Optical Signal to Noise Ratio » (OSNR1ₒᵤₜ), représentés sur la figure 3A en fonction de la longueur d'onde λ. Dans cet exemple, les puissances des signaux des trois canaux C1 sont différentes, mais il pourrait en être autrement. Par ailleurs, l'OSNR est ici le même pour les signaux des trois canaux C1, mais il pourrait en être autrement.

Toujours dans cet exemple, le serveur E veut transmettre au noeud N4, via le noeud N2, des signaux de trois canaux C2 de longueurs d'onde distinctes. Les signaux de ces trois canaux C2 sont introduits dans la ligne L2, suivant la flèche F2, avec des puissances (P2ₒᵤₜ) et un OSNR (OSNR2ₒᵤₜ), représentés sur la figure 3B en fonction de la longueur d'onde λ. Dans cet exemple, les puissances des signaux des trois canaux C2 sont différentes, mais il pourrait en être autrement. Par ailleurs, l'OSNR est ici le même pour les signaux des trois canaux C2, mais il pourrait en être autrement.

Enfin, dans cet exemple, le noeud N3 a reçu sur l'un de ses ports d'insertion trois canaux C3 de longueurs d'onde distinctes portant des signaux qu'il doit transmettre au noeud N4, via le noeud N2. Les signaux de ces trois canaux C3 sont introduits dans la ligne L3, suivant la flèche F3, avec des puissances (P3ₒᵤₜ) et un OSNR (OSNR3ₒᵤₜ), représentés sur la figure 3C en fonction de la longueur d'onde λ. Dans cet exemple, les puissances des signaux des trois canaux C3 sont différentes, mais il pourrait en être autrement. Par ailleurs, l'OSNR est ici le même pour les signaux des trois canaux C3, mais il pourrait en être autrement.

Les différents signaux des canaux C1, C2 et C3 circulent donc dans les lignes L1, L2 et L3, et parviennent sur les ports d'entrée du noeud N2 selon les flèches F'1, F'2 et F'3, respectivement. En arrivant sur ces ports, les canaux présentent des performances inhomogènes du fait qu'ils ont empruntés des lignes différentes. Plus précisément, les signaux ont subi une dégradation quantifiable par un paramètre de dégradation, comme par exemple l'OSNR, ou plus précisément la variation d'OSNR, désignée par δOSNRk (ici k = 1 à 3).

Dans ce qui suit, on considère que le paramètre de dégradation utilisé par le module de traitement PM2 du dispositif D2 pour optimiser les performances des canaux C est la variation d'OSNR (δOSNR). Mais, on pourrait utiliser un autre paramètre, comme par exemple la variation du taux d'erreurs ou du facteur de qualité (Q) ou de la déformation de « l'oeil » (superposition de toutes les trames de 0 et 1 qui circulent sur une ligne).

Les puissances (Pₒᵤₜ(2)) et les OSNRs (OSNRₒᵤₜ(2)) des signaux des canaux C1, C2 et C3 en sortie du noeud N2 sont respectivement regroupés sur les figures 4A et 4B. De même, les puissances (Pᵢₙ(4)) et OSNRs (OSNRᵢₙ(4)) des signaux contenus dans les canaux C1, C2 et C3 à l'entrée du noeud N4 sont respectivement regroupés sur les figures 5A et 5B.

Les figures 4A et 5A matérialisent ainsi les variations de puissance des canaux C1, C2 et C3 entre l'entrée (fig. 4A) et la sortie (fig. 5A) de la ligne L4, avant traitement par le dispositif selon l'invention. De même, les figures 4B et 5B matérialisent les variations (δOSNR(1)) des OSNRs des différents canaux (C1, C2 et C3) induites par les cascades de spans dans la ligne L4, avant traitement par le dispositif selon l'invention.

Dans l'exemple illustré sur les figures 4 et 5, on peut observer que les variations d'OSNR (δOSNR_{1,2}(1)) subies par les signaux des canaux C1 et C2 sur la ligne L4 sont sensiblement identiques, mais qu'elles diffèrent de celle (δOSNR₃(1)) subie par les signaux des canaux C3. Cela étant nuisible aux performances, le dispositif de contrôle D2 est destiné à y remédier.

Comme cela est illustré sur la figure 2, la mesure des dégradations introduites par la ligne considérée (ici, L4), c'est-à-dire, ici, la détermination des variations d'OSNR (δOSNR(1)), également appelées valeurs de paramètre de dégradation, est effectuée par un premier module de calcul CM1 qui fait préférentiellement partie du module de traitement PM2 (bien que cela ne soit pas obligatoire). De nombreuses techniques, bien connues de l'homme de l'art, permettent de déterminer au niveau d'un noeud Ni les OSNRs et les puissances associées aux signaux (Siₒᵤₜ) contenus dans les différents canaux reçus et émis, et d'en déduire les variations d'OSNR (δOSNR) induites par les lignes de transmission Lj auxquelles ce noeud Ni est raccordé. Ces techniques ne faisant pas l'objet de l'invention, elle ne sont donc pas décrites ici. Par exemple, on peut utiliser la technique dite de contrôle de puissance optique (ou OPM pour « Optical Performance Monitoring »).

Une fois que le premier module de calcul CM1 du noeud N2 est en possession des OSNRs des canaux C1, C2 et C3 en sortie du noeud N2 (OSNR1ₒᵤₜ(2), OSNR2ₒᵤₜ(2) et OSNR3ₒᵤₜ(2)) et à l'entrée du noeud N4 (OSNR1ᵢₙ(4), OSNR2ᵢₙ(4) et OSNR3ᵢₙ(4)), il les communique à un module de comparaison CM2 du module de traitement PM2 du noeud N2, chargé de les comparer entre eux.

Plus précisément, le module de comparaison CM2 est chargé de comparer entre-elles les valeurs des OSNRs d'entrée et de sortie de chaque canal, reçues du premier module de calcul CM1, afin de déterminer leurs écarts (δOSNR) et comparer ces écarts à un intervalle de largeur choisie (ou une tolérance d'amplitude choisie). Cette largeur (ou amplitude) peut être choisie aussi petite que désirée. Elle peut même être nulle.

Si les écarts des différents OSNRs (δOSNR₁(1), δOSNR₂(1) et δOSNR₃(1)) sont inclus dans l'intervalle (ou la tolérance) choisi(e), alors le traitement prend fin. Les signaux des canaux C1, C2 et C3, appelés signaux sortants (Siₒᵤₜ), poursuivent leur chemin vers le noeud N4 dans la ligne L4, selon les flèches F4 et F'4. Les signaux introduits dans la ligne L4 présentent alors des puissances de sortie Pₒᵤₜ(2).

En revanche, si les écarts entre les différents OSNRs (δOSNR₁(1), δOSNR₂(1) et δOSNR₃(1)) ne sont pas inclus dans l'intervalle (ou la tolérance) choisi(e), alors le module de comparaison CM2 les communique à un second module de calcul CM3, chargé de déterminer pour chaque canal, compte tenu des OSNRs associés, un profil de puissance à imposer aux signaux de sorte qu'ils présentent un δOSNR(2) d'une valeur choisie à la sortie de la ligne L4.

En appliquant des profils de puissance spécifiques à des signaux contenus dans des canaux définis dans une même fibre optique, on modifie les quantités de bruit ajoutées sur la ligne de transmission considérée, et par conséquent on peut contrôler les dégradations relatives entre ces OSNRs de sortie, permettant ainsi de contrôler les dégradations de performances entre les canaux sur la ligne considérée.

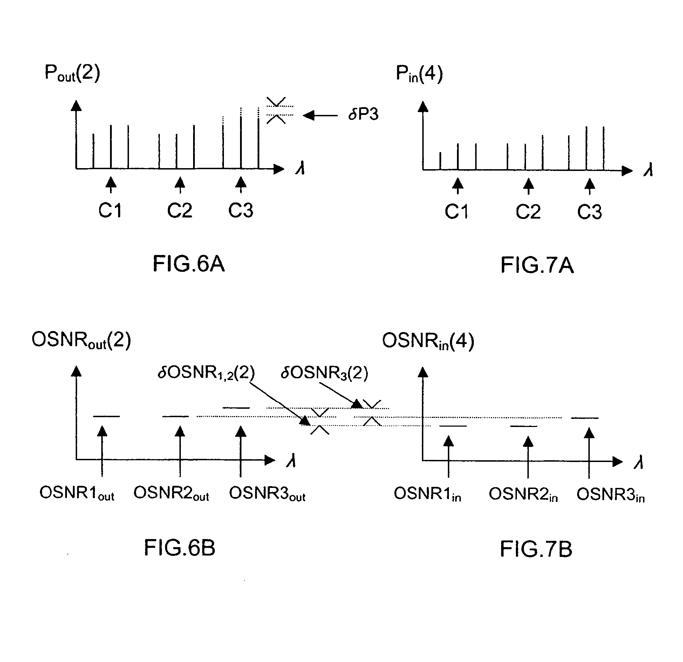

Ainsi, dans l'exemple illustré sur la figure 6A, le second module de calcul décide de ne pas modifier les puissances des signaux des canaux C1 et C2, mais de réduire d'une valeur δP3 la puissance des signaux des canaux C3. Comme illustré sur les figures 6A et 6B, cette variation δP3 renforce la valeur relative des signaux des canaux C1 et C3, ce qui se traduit par une légère augmentation du bruit ajouté aux canaux C3 et une importante diminution du bruit ajouté aux canaux C1 et C2. Ceci se traduit directement par une variation de dégradation d'OSNR sur la ligne L4.

Comme on peut l'observer sur la figure 6B, dans cet exemple, les OSNRs de sortie OSNR1ₒᵤₜ(2), OSNR2ₒᵤₜ(2) et OSNR3ₒᵤₜ(2) des canaux C1, C2 et C3 ne sont pas égaux (ce qui est généralement le cas). Cependant, ceci n'empêche pas d'égaliser la dégradation de l'OSNR sur la ligne L4.

Une fois que le second module de calcul CM3 a déterminé les profils de puissance à imposer aux signaux des canaux C1, C2 et C3, il les communique au module de contrôle de puissance CM4, chargé de les appliquer dans le noeud N2 (placé à l'extrémité amont de la ligne de transmission L4). Par conséquent, chaque profil de puissance est préférentiellement appliqué non pas sur les signaux reçus par le noeud N4, mais sur les prochains signaux qui doivent circuler dans la ligne de transmission L4 et qui seront reçus par le noeud N4 ultérieurement. En d'autres termes, on effectue la détection sur des signaux et on applique le profil déterminé aux signaux suivants.

A cet effet, chaque module de contrôle de puissance CM4 comprend un module d'atténuation, chargé d'appliquer aux signaux un spectre d'atténuation adapté au profil de puissance déterminé, lequel peut avoir une forme variable, quelconque.

Une fois les profils appliqués aux signaux suivants reçus, dans le noeud N2, ils sont communiqués au premier module de calcul CM1 qui détermine leurs OSNRs respectifs, puis les communique au module de comparaison CM2, de sorte qu'il vérifie que lesdits δOSNRs correspondants sont bien inclus dans l'intervalle de largeur (ou la tolérance d'amplitude) choisie.

Il est préférable de vérifier si les δOSNRs de sortie sont inclus dans l'intervalle de largeur (ou la tolérance d'amplitude) choisie, car l'application des différents profils de puissance calculés ne permet pas toujours de faire varier tous les OSNRs de sortie comme la théorie le prévoit.

Afin de faire converger les δOSNRs vers les valeurs choisies (prévues) par le calcul effectué par le second module de calcul CM3, le module de traitement PM2 peut être agencé de manière à fonctionner en mode itératif. Plus précisément, tant que la convergence n'est pas obtenue, c'est-à-dire tant que les δOSNRs mesurés ne sont pas tous inclus dans l'intervalle de largeur (ou la tolérance d'amplitude) choisie, le module de traitement PM2 effectue des boucles de traitement (CM2 → CM3 → CM4 → CM1 → CM2). D'une manière générale, les boucles de traitement peuvent adapter les méthodes de calcul du second module de calcul CM3 à l'état du système, compte tenu éventuellement de son passé, à l'aide d'algorithmes pouvant être très complexes. Par exemple, on peut faire varier à chaque boucle le pas de l'algorithme de calcul mis en oeuvre par le second module de calcul CM3.

Chaque boucle est effectuée sur des signaux différents auxquels ont été appliqués les profils déterminés à la boucle précédente.

Une fois la convergence obtenue, c'est-à-dire lorsque les différents δOSNRs (δOSNR₁(2), δOSNR₂(2) et δOSNR₃(2)) sont tous inclus dans l'intervalle (ou la tolérance) choisi(e), le traitement prend fin.

Les signaux des canaux C1, C2 et C3 empruntant la même ligne de transmission, ici L4, avec des valeurs de paramètre de dégradation (δOSNR) de même ordre, voire identiques, ils subissent ainsi la même dégradation, comme illustré sur les figures 7A et 7B.

Les figures 6A et 7A ont été placées à un même niveau afin de faciliter l'observation des variations des niveaux de puissance des différents canaux (C1, C2 et C3) induites par la cascade de spans de la ligne L4, après traitement par le dispositif selon l'invention. De même, les figures 6B et 7B ont été placées à un même niveau afin de faciliter l'observation des variations (δOSNR(2)) des OSNRs des différents canaux (C1, C2 et C3) induites par la cascade de spans de la ligne L4, après traitement par le dispositif selon l'invention. Dans les figures 7A et 7B, Pᵢₙ(4), OSNRᵢₙ(4) et δOSNR(2) désignent respectivement la puissance des signaux sur les ports d'entrée du noeud N4, l'OSNR des signaux sur les ports d'entrée du noeud N4 et la variation d'OSNR (ou dégradation) introduite par la ligne L4, après traitement par le dispositif selon l'invention.

Comme on peut le constater sur les figures 6B et 7B, dans l'exemple illustré la variation d'OSNR (δOSNR₁(2)) subie par les canaux C1 est sensiblement identique à la variation d'OSNR (δOSNR₂(2)) subie par les canaux C2, laquelle est sensiblement identique à la variation d'OSNR (δOSNR₃(2)) subie par les canaux C3. En d'autres termes, l'écart qui existait en sortie du noeud N2 entre les OSNR3ₒᵤₜ(2), d'une part, et les OSNR1ₒᵤₜ(2) et OSNR2ₒᵤₜ(2), a été sensiblement maintenu (ou conservé) jusqu'à l'entrée du noeud N4.

Lorsque les signaux doivent être retransmis sur une ou plusieurs lignes sortant du noeud N4, on peut leur appliquer un nouveau traitement à l'aide du dispositif de contrôle D4 qui équipe le noeud N4. Cela est notamment utile lorsque de nouveaux canaux provenant d'un port d'insertion du noeud N4 ou d'un autre noeud (par exemple N5) doivent être retransmis sur une ligne sortante, et/ou lorsque l'intervalle (ou la tolérance) de comparaison utilisé(e) par le module de comparaison CM2 du noeud N4 est moins large que celui utilisé par le noeud N2 précédent. Il est en effet important de noter que les intervalles utilisés par les différents dispositifs Di du réseau ne sont pas forcément les mêmes. Cela permet notamment de tenir compte des différents niveaux de service et de sécurité que peuvent supporter les lignes de transmission sortant des différents noeuds du réseau.

Afin de faciliter le traitement effectué par le dispositif de contrôle Di implanté dans un noeud Ni, il peut être avantageux d'égaliser les gains des canaux en amont dudit noeud Ni, en fonction de leurs longueurs d'onde respectives. Cela est plus particulièrement utile lorsque le réseau est à commutation de bandes de longueurs d'onde.

Cette égalisation de gain est une technique bien connue de l'homme de l'art. Par conséquent elle ne sera pas décrite ici. Elle est préférentiellement effectuée par des filtres couplés aux amplificateurs relais implantés sur les lignes de transmission.

Par ailleurs, lorsque le dispositif de contrôle D doit traiter des multiplex comprenant plusieurs bandes de longueurs d'onde comportant chacune plusieurs canaux équidistants, par exemple 5, le traitement est sensiblement identique. Il suffit en effet de considérer chaque bande comme un canal, et par conséquent de déterminer l'OSNR associé à chaque bande, puis le profil de puissance à imposer à chaque bande compte tenu des OSNRs associés aux différentes bandes reçues.

Le dispositif de contrôle D, et plus précisément ses premier CM1 et second CM3 modules de calcul, son module de comparaison CM2 et son module de contrôle de puissance CM4, peuvent être réalisés sous la forme de circuits électroniques (ou « hardware »), de modules logiciels ou informatiques (ou « software »), ou d'une combinaison de circuits et de logiciels.

L'invention offre également un procédé de contrôle de paramètres de dégradation, comme par exemple δOSNRs, associés à des signaux Si circulant dans des canaux Ck de longueurs d'onde distinctes, éventuellement agencés en bandes de canaux, et définis dans des lignes de transmission Lj reliant entre-eux les noeuds Ni d'un réseau de communications optique de type transparent.

Celui-ci peut être mis en oeuvre à l'aide d'au moins un dispositif de contrôle D et d'un réseau transparent du type de ceux présentés ci-avant. Les fonctions et sous-fonctions principales et optionnelles assurées par les étapes de ce procédé étant sensiblement identiques à celles assurées par les différents moyens constituant le dispositif de contrôle D et/ou le réseau transparent, seules seront résumées ci-après les étapes mettant en oeuvre les fonctions principales du procédé selon l'invention.

Ce procédé comprend les étapes suivantes :
a) déterminer pour chacun d'au moins deux canaux Ck ou bandes de canaux d'au moins une ligne de transmission Lj une valeur d'un paramètre représentatif de la dégradation des signaux dans la ligne Lj, et
b) déterminer pour chacun des canaux, ou chacune des bandes de canaux, compte tenu des valeurs déterminées, un profil de puissance à imposer aux signaux afin qu'ils présentent une valeur choisie de paramètre de dégradation.

Préférentiellement, lors de l'étape b) on choisit les valeurs de paramètre de dégradation de sorte qu'elles soient incluses dans un intervalle de largeur (ou une tolérance d'amplitude) choisie (éventuellement nulle). Dans ce cas, il est avantageux de prévoir un mécanisme itératif consistant à répéter les étapes a) et b), par exemple en faisant varier à chaque fois un pas de traitement, jusqu'à ce que les valeurs de paramètre de dégradation soient toutes incluses dans l'intervalle (ou la tolérance) choisi(e).

Par ailleurs, il peut être avantageux, notamment lorsque le réseau est à commutation de bandes de longueurs d'onde, d'égaliser dans chaque ligne de transmission les gains des canaux Ck des différentes bandes en fonction de leurs longueurs d'onde respectives, avant de réceptionner les signaux Siᵢₙ au niveau du noeud considéré Ni.

Grâce à l'invention, le problème complexe de l'optimisation des performances des canaux d'un réseau transparent est segmenté et par conséquent plus facile à effectuer. Cette segmentation facilite en outre l'optimisation de la conception des réseaux, ligne de transmission après ligne de transmission.

Par ailleurs, du fait de son caractère dynamique l'optimisation est désormais compatible, d'une part, avec les ajustements des lignes de transmission imposés par leur vieillissement, et d'autre part, avec les reconfiguration de routage.

De plus, l'invention permet l'optimisation globale et simultanée de tous les canaux.

Enfin, grâce à l'invention il est possible d'ajuster l'optimisation afin de permettre la fourniture de qualités de service variables.

L'invention ne se limite pas aux modes de réalisation de procédé, dispositif de contrôle Di et équipements de réseau Ni décrits ci-avant, seulement à titre d'exemple, mais elle englobe toutes les variantes que pourra envisager l'homme de l'art dans le cadre des revendications ci-après.

Ainsi, dans ce qui précède il a été décrit un exemple d'utilisation d'un dispositif de contrôle selon l'invention dans lequel les n canaux empruntant une même ligne de transmission possédaient des puissances différentes mais un même OSNR. Mais, le dispositif de contrôle de l'invention est également adapté au cas où les n canaux empruntant une même ligne de transmission possèdent des puissances différentes et des OSNRs différents.

Par ailleurs, dans ce qui précède il a été décrit une application du dispositif selon l'invention au contrôle de la puissance. Mais, l'invention n'est pas limitée à ce paramètre. Elle concerne également d'autres paramètres, comme par exemple la dispersion chromatique, l'état de polarisation, la fluctuation de longueur d'onde (ou « chirping »), ou l'état de phase.

## Revendications

1. Procédé de contrôle de paramètres de dégradation associés à des signaux (Siᵢₙ) de canaux (Ck) de longueurs d'onde distinctes, éventuellement agencés en bandes de canaux, et transmis par des lignes de transmission (Lj) reliant des noeuds (Ni) d'un réseau de communications optique de type transparent, comprenant l'étape de :
a) mesurer pour chacun d'au moins doux canaux (Ck) ou bandes de canaux pour au moins une ligne de transmission (Lj) une valeur d'un paramètre représentatif de la dégradation subie par un signal dudit canal (Ck) ou de ladite bande de canaux dans ladite ligne (Lj),
b) déterminer pour lesdits canaux (Ck) ou lesdites bandes de canaux, compte tenu desdites valeurs mesurées dudit paramètre représentatif de la dégradation, un profil de puissance à imposer aux signaux de ces canaux de sorte qu'ils présentent des valeurs prédéterminées dudit paramètre représentatif de la dégradation, **caractérisé en ce que** ledit paramètre représentatif de la dégradation comporte la variation d'un paramètre dudit signal entre une entrée et une sortie de ladite ligne de transmission, ladite variation étant mesurée à chaque fois en comparant entre elles la valeur dudit paramètre du signal à l'entrée de ladite ligne de transmission et la valeur dudit paramètre du signal à la sortie de ladite ligne de transmission.

2. Procédé selon la revendication 1, **caractérisé en ce que** l'on applique ledit profil de puissance dans un noeud du réseau, placé à une extrémité amont de ladite ligne de transmission.

3. Procédé selon l'une des revendications 1 ou 2, **caractérisé en ce que** ledit paramètre de dégradation est la variation du rapport signal sur bruit optique, dit « OSNR », dans ladite ligne.

4. Procédé selon l'une des revendications 1 à 3, **caractérisé en ce qu'**à l'étape b) on choisit lesdites valeurs de paramètre de dégradation de sorte qu'elles soient incluses dans un intervalle de largeur choisie.

5. Procédé selon la revendication 4, **caractérisé en ce que** l'on réitère les étapes a) et b) jusqu'à ce que lesdites valeurs de paramètre de dégradation soient incluses dans ledit intervalle.

6. Procédé selon l'une des revendications 4 ou 5, **caractérisé en ce que** ledit intervalle présente une largeur nulle.

7. Procédé selon l'une des revendications 1 à 6, **caractérisé en ce qu'**avant de réceptionner lesdits signaux à l'étape a) on égalise les gains desdits canaux (Ck) dans ladite ligne (Lj), en fonction de leurs longueurs d'onde respectives.

8. Dispositif (D) de contrôle de paramètres de dégradation associés à des signaux (Siᵢₙ) de canaux (Ck) de longueurs d'onde distinctes, éventuellement agencés en bandes de canaux, et transmis par des lignes de transmission (Lj) reliant des noeuds (Ni) d'un réseau de communications optique de type transparent, comprenant des moyens de traitement (PMi) agencés, en cas de transmission de signaux (Siᵢₙ) d'au moins deux canaux (Ck) ou bandes de canaux par au moins une ligne de transmission (Lj), pour :
a) mesurer pour chacun desdits canaux (Ck) ou chacune desdites bandes de canaux, la valeur d'un paramètre représentatif de la dégradation d'un signal dudit canal (Ck) ou de ladite bande de canaux dans la ligne correspondante (Lj),
b) comparer entre-elles la valeur dudit paramètre du signal à l'entrée de ladite ligne de transmission et la valeur dudit paramètre du signal à la sortie de ladite ligne de transmission pour mesurer à chaque fois ladite variation, et
c) déterminer, compte tenu desdites valeurs mesurées du paramètre représentatif de la dégradation, un profil de puissance à imposer aux signaux (Siᵢₙ) de sorte qu'ils présentent des valeurs prédéterminées dudit paramètre représentatif de la dégradation, **caractérisé en ce que** ledit paramètre représentatif de la dégradation comporte la variation d'un paramètre dudit signal entre une entrée et une sortie de ladite ligne de transmission.

9. Dispositif selon la revendication 8, **caractérisé en ce que** ledit paramètre de dégradation, déterminé par lesdits moyens de traitement (PMi), est la vanation du rapport signal sur bruit optique dit « OSNR », dans ladite ligne.

10. Dispositif selon l'une des revendications 8 ou 9, **caractérisé en ce que** lesdits moyens de traitement (PMi) sont agencés pour choisir lesdites valeurs de paramètre de dégradation de manière à ce qu'elles soient incluses dans un intervalle de largeur choisie.

11. Dispositif selon la revendication 10, **caractérisé en ce que** lesdits moyens de traitement (PMi) sont agencés pour réitérer ladite détermination des valeurs de paramètre de dégradation jusqu'à ce que lesdites valeurs de paramètre de dégradation soient incluses dans ledit intervalle

12. Dispositif selon l'une des revendications 10 ou 11, **caractérisé en ce que** ledit intervalle présente une largeur nulle.

13. Dispositif selon l'une des revendications 8 à 12, **caractérisé en ce que** lesdits moyens de traitement (PMi) comprennent un module de contrôle de puissance (CM4) agencé pour imposer auxdits signaux des profils de puissance déterminés, correspondants, avant leur introduction dans ladite ligne de transmission (Lj).

14. Dispositif selon la revendication 13, **caractérisé en ce que** ledit module de contrôle de puissance (CM4) est agencé pour imposer des profils de puissance déterminés dans un noeud du réseau, placé à une extrémité amont de ladite ligne de transmission.

## Claims

1. A method for controlling degradation parameters associated with signals (Siᵢₙ) of channels (Ck) with distinct wavelengths, potentially configured as channel bands, and transmitted by transmission lines (Lj) connecting nodes (Ni) of a transparent optical communications network, comprising the step of:
a) measuring, for each of at least two channels (Ck) or bands of channels for at least one transmission line (Lj), a value of a parameter representative of the degradation experienced by a signal of said channel (Ck) or of said band of channels within said line (Lj),
b) determining for said channels (Ck) or said bands of channels, given said measured values of said parameter representative of the degradation, a power profile to be imposed on the signals of these channels so that they exhibit predetermined values of said parameter representative of the degradation, **characterized in that** said parameter representative of the degradation comprises the variation in a parameter of said signal between an input and an output of said transmission line, said variation being measured each time, comparing the value of said signal parameter at the input of said transmission line against the value of said signal parameter at the output of said transmission line.

2. A method according to claim 1, **characterized in that** said power profile is applied within a node of the network, placed at an upstream end of said transmission line.

3. A method according to one of the claims 1 or 2, **characterized in that** said degradation parameter is the variation in the optical signal to noise ratio, or "OSNR", within said line.

4. A method according to one of the claims 1 to 3, **characterized in that** in step b) said degradation parameter values are chosen so that they fall within an interval of a chosen length.

5. A method according to claim 4, **characterized in that** steps a) and b) are repeated until said degradation parameter values fall within said interval.

6. A method according to one of the claims 4 or 5, **characterized in that** said interval has a nonzero length.

7. A method according to one of the claims 1 to 6, **characterized in that** before receiving said signals during step a), the gains of said signals (Ck) within said line (Lj) are equalized, based on their respective wavelengths.

8. A device (D) for controlling degradation parameters associated with signals (S) of channels (Ck) with distinct wavelengths, potentially configured as channel bands, and transmitted by transmission lines (Lj) connecting nodes (Ni) of a transparent optical communications network, comprising processing means (PMi) configured, when transmitting signals (Siᵢₙ) of at least two channels (Ck) or bands of channels over at least one transmission line (Lj), to:
a) measure, for each of at least two channels (Ck) or each of said bands of channels, the value of a parameter representative of the degradation of a signal of said channel (Ck) or of said band of channels within the corresponding line (Lj),
b) compare the value of said signal parameter at the input of said transmission line against the value of said signal parameter at the output of said transmission line in order to measure said variation each time, and
c) determine, given said measured values of the parameter representative of the degradation, a power profile to impose on the signals (Siᵢₙ) so that they exhibit predetermined values of said parameter representative of the degradation,
**characterized in that** said parameter representative of the degradation comprises the variation in a parameter of said signal between an input and an output of said transmission line.

9. A device according to claim 8, **characterized in that** said degradation parameter, determined by said processing means (PMi), is the variation of the optical signal to noise ration or "OSNR" within said line.

10. A device according to one of the claims 8 or 9, **characterized in that** said processing means (PMi) are configured to choose said degradation parameter values so that they fall within an interval of a chosen length.

11. A device according to claim 10, **characterized in that** said processing means (PMI) are configured to repeat said determination of the degradation parameter values until said degradation parameter values fall within said interval.

12. A device according to one of the claims 10 or 11, **characterized in that** said interval has a nonzero length.

13. A device according to one of the claims 8 to 12, **characterized in that** said processing means (PMi) comprise a power control module (CM4) configured to impose corresponding determined power profiles on said signals before they are added into said transmission line (Lj).

14. A device according to claim 13, **characterized in that** said power control module (CM4) is configured to impose power profiles determined within a node of the network, placed at an upstream end of said transmission line.

## Patentansprüche

1. Verfahren zur Kontrolle von Verschlechterungsparametern, welche mit Signalen (Siᵢₙ) von Kanälen (Ck), die verschiedene Wellenlängen aufweisen und gegebenenfalls in Kanalbändern angeordnet sind, assoziiert sind und über Übertragungsleitungen (Lj), welche Knoten (Ni) eines optischen Kommunikationsnetzwerks eines transparenten Typs verbinden, übertragen werden, wobei das Verfahren die folgenden Schritte umfasst:
a) Messen, für einen jeden von mindestens zwei Kanälen (Ck) oder Kanalbändern für mindestens eine Übertragungsleitung (Lj), eines Wertes eines Parameters, welcher für die Verschlechterung eines Signals des besagten Kanals (Ck) oder der besagten Kanalbänder in der besagten Leitung (Lj) repräsentativ ist,
b) Ermitteln, für die besagten Kanäle (Ck) oder die besagten Kanalbänder, unter Berücksichtigung der besagten gemessenen Werte des besagte Parameters, welcher für die Verschlechterung repräsentativ ist, eines den Signalen dieser Kanäle aufzuprägenden Leistungsprofils, so dass sie vorbestimmte Werte des besagten für die Verschlechterung repräsentativen Parameters aufweisen,
**dadurch gekennzeichnet, dass** der besagte für die Verschlechterung repräsentative Parameter die Veränderung eines Parameters des besagten Signals zwischen einem Eingang und einem Ausgang der besagten Übertragungsleitung enthält, wobei die besagte Veränderung jeweils gemessen wird, indem der Wert des besagten Signalparameters am Eingang der besagten Übertragungsleitung und der Wert des besagten Signalparameters am Ausgang der besagten Übertragungsleitung untereinander verglichen werden.

2. Verfahren nach Anspruch 1, **dadurch gekennzeichnet, dass** man das besagte Leistungsprofil in einem Knoten des Netzwerks, welcher an einem stromaufwärts liegenden Ende der besagten Übertragungsleitung angeordnet ist, anwendet.

3. Verfahren nach einem der Ansprüche 1 oder 2, **dadurch gekennzeichnet, dass** der besagte Verschlechterungsparameter die Veränderung des optischen Signal-Rauschabstands, "OSNR" genannt, in der besagten Leitung ist.

4. Verfahren nach einem der Ansprüche 1 bis 3, **dadurch gekennzeichnet, dass** man in Schritt b) die besagten Werte des Verschlechterungsparameters derart wählt, dass sie im gewählten Breitenabstand inbegriffen sind.

5. Verfahren nach Anspruch 4, **dadurch gekennzeichnet, dass** man die Schritte a) und b) so lange wiederholt, bis die besagten Werte des Verschlechterungsparameters in dem besagten Abstand inbegriffen sind.

6. Verfahren nach einem der Ansprüche 4 oder 5, **dadurch gekennzeichnet, dass** der besagte Abstand eine Breite von Null aufweist.

7. Verfahren nach einem der Ansprüche 1 bis 6, **dadurch gekennzeichnet, dass** man, bevor die besagten Signale empfangen werden, in Schritt a) die Verstärkungen der besagten Kanäle (Ck) in der besagten Leitung (Lj) gemäß deren jeweiligen Wellenlängen entzerrt.

8. Vorrichtung (D) für die Kontrolle der Verschlechterungsparameter, welche mit Signalen (Siᵢₙ) von Kanälen (Ck) assoziiert sind, die verschiedene Wellenlängen aufweisen und gegebenenfalls in Kanalbändern angeordnet sind und über Übertragungsleitungen (Lj), welche Knoten (Ni) eines optischen Kommunikationsnetzwerks eines transparenten Typs verbinden, übertragen werden, wobei die Vorrichtung Verarbeitungsmittel (PMi) umfasst, welche im Fall der Übertragung von Signalen (Siᵢₙ) von mindestens zwei Kanälen (Ck) oder Kanalbändern über mindestens eine Übertragungsleitung (Lj) dazu ausgelegt sind:
a) Für einen jeden der besagten Kanäle (Ck) oder ein jedes der besagten Kanalbänder einen Wert eines Parameters, welcher für die Verschlechterung eines Signals des besagten Kanals (Ck) oder der besagten Kanalbänder in der entsprechenden Leitung (Lj) repräsentativ ist, zu messen,
b) den Wert des besagten Signalparameters am Eingang der besagten Übertragungsleitung und den Wert des besagten Signalparameters am Ausgang der besagten Übertragungsleitung untereinander zu vergleichen, um jeweils die besagte Veränderung zu messen, und
c) unter Berücksichtigung der besagten gemessenen Werte des Parameters, welcher für die Verschlechterung repräsentativ ist, ein diesen Signalen (Siᵢₙ) aufzuprägendes Leistungsprofil zu ermitteln, so dass sie vorbestimmte Werte des besagten für die Verschlechterung repräsentativen Parameters aufweisen,
**dadurch gekennzeichnet, dass** der besagte für die Verschlechterung repräsentative Parameter die Veränderung eines Parameters des besagten Signals zwischen einem Eingang und einem Ausgang der besagten Übertragungsleitung enthält.

9. Vorrichtung nach Anspruch 8, **dadurch gekennzeichnet, dass** der besagte Verschlechterungsparameter, welcher von den besagten Verarbeitungsmitteln (PMi) ermittelt wurde, die Veränderung des optischen Signal-Rauschabstands, "OSNR" genannt, in der besagten Leitung ist.

10. Vorrichtung nach einem der Ansprüche 8 oder 9, **dadurch gekennzeichnet, dass** die besagten Verarbeitungsmittel (PMi) dazu ausgelegt sind, die besagten Werte des Verschlechterungsparameters derart zu wählen, dass sie im gewählten Breitenabstand inbegriffen sind.

11. Vorrichtung nach Anspruch 10, **dadurch gekennzeichnet, dass** die besagten Verarbeitungsmittel (PMi) dazu ausgelegt sind, die besagte Ermittlung der Werte der Verschlechterungsparameter so lange zu wiederholen, bis die besagten Werte des Verschlechterungsparameters in dem besagten Abstand inbegriffen sind.

12. Vorrichtung nach einem der Ansprüche 10 oder 11, **dadurch gekennzeichnet, dass** der besagte Abstand eine Breite von Null aufweist.

13. Vorrichtung nach einem der Ansprüche 8 bis 12, **dadurch gekennzeichnet, dass** die besagten Verarbeitungsmittel (PMi) ein Leistungssteuerungsmodul (CM4) umfassen, welches dazu ausgelegt ist, den besagten Signalen vor deren Einspeisen in die besagte Übertragungsleitung (Lj) entsprechende ermittelte Leistungsprofile aufzuprägen.

14. Vorrichtung nach Anspruch 13, **dadurch gekennzeichnet, dass** das besagte Leistungssteuerungsmodul (CM4) dazu ausgelegt ist, in einem an einem stromaufwärts liegenden Ende der besagten Übertragungsleitung angeordneten Knoten des Netzwerks Leistungsprofile aufzuprägen.
